# EUROPÄISCHE PATENTSCHRIFT

(11) **EP 2 737 514 B1**
(45) Veröffentlichungstag und Bekanntmachung des Hinweises auf die Patenterteilung: **25.05.2016**
(21) Anmeldenummer: 12748179.4
(22) Anmeldetag: 26.07.2012
(51) Int. Cl.: H01H 83/04, H01H 83/14, H01F 29/14

(54) **SCHALTGERAET**
SWITCHING DEVICE
APPAREIL DE COMMUTATION

(30) Priorität: 26.07.2011 AT 10922011; 26.07.2011 US 201161511718 P
(43) Veröffentlichungstag der Anmeldung: 04.06.2014
(73) Patentinhaber: Eaton Holding (Austria) GmbH, 3943 Schrems (NÖ) (AT)
(72) Erfinder: KOCH, Michael, A-1190 Wien (AT)
(74) Vertreter: Eaton IP Group EMEA
(86) Internationale Anmeldenummer: PCT/EP2012/064735
(87) Internationale Veröffentlichungsnummer: WO 2013/014251

(56) Entgegenhaltungen:
- WO-A2-2009/043075
- DE-A1- 4 432 643
- GB-A- 1 602 843

## Beschreibung

Die Erfindung betrifft ein Schaltgerät gemäß dem Oberbegriff des Patentanspruches 1.

Es sind Fehlerstromschutzschalter bekannt, welche elektrische Leitungen, die zu einem Teilstromnetz oder Verbraucher führen, überwachen, und beim Auftreten eines Fehlerstromes, daher einer Differenz zwischen zugeleiteten Strom und abgeleiteten Strom, die Stromversorgung des Teilstromnetzes unterbrechen. In der Regel werden die elektrischen Leitungen, welche zum Teilstromnetz oder Verbraucher führen, mittels eines Summenstromwandlers überwacht. Beim Auftreten eines Fehlerstromes wird eine, mit dem Summenstromwandler verbundene, Auslöseschaltung aktiviert, welche in Folge Schaltkontakte trennt, wodurch das Teilstromnetz oder der Verbraucher vom Versorgungsnetz getrennt wird.

Solche Fehlerstromschutzschalter verfügen über eine Vorrichtung zur Überprüfung der Funktionstauglichkeit. Dabei ist etwa eine Prüfleitung mit einem Prüftaster vorgesehen, wobei die Prüfleitung Teile des Stromes am Summenstromwandler vorbei führt, wenn der Prüftaster betätigt wird. Bei Betätigung des Prüftasters erfolgt eine Auslösung des Fehlerstromschutzschalters, wobei weiters der Verbraucher durch diese Überprüfung vom Versorgungsnetz getrennt wird. Deshalb wird diese Überprüfung oft nicht durchgeführt, da beispielsweise Verbraucher wie Computer oder Server empfindlich auf Unterbrechungen der Stromversorgung reagieren, oder wegen der Unbequemlichkeit die Uhren diverser elektronischer Geräte, wie beispielsweise Video-Rekorder, nach einer Stromunterbrechung neu zu stellen.

Um eine Unterbrechung der Stromversorgung des Verbrauchers bei der Überprüfung zu verhindern, kann für die Dauer der Überprüfung der Fehlerstromschutzschalter mittels eines Schaltgerätes überbrückt werden. Ein Problem besteht nun darin, dass es bei der Überbrückung des Fehlerstromschutzschalters unter realen Bedingungen zu Unsymmetrien bezüglich den Teil des Stromes, welcher durch das Schaltgerät am Fehlerstromschutzschalter vorbeigeführt wird, kommt, wodurch der Fehlerstromschutzschalter auslöst, bevor die Überbrückung vollständig erfolgt ist, oder der Fehlerstromschutzschalter nach erfolgter Überprüfung nicht wieder rückgestellt werden kann, ohne auszulösen.

Um diese Unsymmetrien zu kompensieren, können die Leitungen des Schaltgerätes zur Überbrückung mittels eines Transformators miteinander gekoppelt werden. Dadurch soll es weitgehend zu einer Symmetrisierung der beiden Ströme, wodurch die Unsymmetrien der Überbrückungsschaltung kompensiert werden soll.

Diese theoretische Funktion bzw. Wirkung ist jedoch in der Realität einer elektrischen Installationsumgebung nicht gegeben. In realen Systemen treten tatsächlich Unsymmetrien auf, welche so groß sind, dass deren Ausgleich mit einem Schaltgerät gemäß dem Stand der Technik nur bei sehr großen Magnetkernen möglich ist. Dies ist jedoch in der Praxis nachteilig, da derartige Magnetkerne eine sehr große Baugröße und Masse aufweisen, was deren Integration in eine herkömmliche Installationsanordnung erschwert. Derartige Kerne bestehen aus hochwertigen Werkstoffen und stellen einen erheblichen Kostenfaktor eines entsprechenden Schaltgeräts dar. Sowohl die Baugröße, als auch die hohen Kosten derartiger praxistauglicher Schaltgeräte senken deren Verbreitung, wobei oftmals auf die Installation derartiger Schaltgeräte gänzlich verzichtet wird. Dies führt dazu, dass die Funktionstauglichkeit von Fehlerstromschutzschaltern, welche Lastkreise schützen sollen, deren Abschaltung unerwünscht ist, über einen langen Zeitraum nicht geprüft wird, und dadurch ein möglicherweise defekter Fehlerstromschutzschalter auch nicht erkannt wird. Dadurch sinkt die Sicherheit in elektrischen Installationsanordnungen, wodurch Menschenleben und Anlagen einer stetig steigenden Gefahr ausgesetzt werden.

Die WO 2009/043075 A1 zeigt einen Fehlerstromschutzschalter, welche gewährleistet, dass bei einer Fehlerstromprüfung die Last weiter an Spannung liegt.

Die DE 44 32 643 A1 beschreibt eine Kontaktanordnung für einen Fehlerstromschutzschalter zum Erstellen eines Prüfstromkreises.

Die GB 1 602 843 offenbart ein Verfahren zur Aufrechterhaltung eines ungesättigten Zustandes eines Transformators.

Aufgabe der Erfindung ist es daher ein Schaltgerät der eingangs genannten Art anzugeben, mit welchem die genannten Nachteile vermieden werden können, mit welchem eine unterbrechungsfreie Prüfung eines Fehlerstromschutzschalters unter realen Bedingungen möglich ist, welches eine geringe Baugröße und Masse aufweist, und mit welchem der Schutz gegen Fehlerströme in elektrischen Anlagen erhöht werden kann.

Erfindungsgemäß wird dies durch die Merkmale des Patentanspruches 1 erreicht.

Dadurch ergibt sich der Vorteil, dass die Funktionstauglichkeit eines Fehlerstromschutzschalters zuverlässig ohne Unterbrechung des Stromkreises unter realen Bedingungen erfolgen kann. Dies ist besonders wichtig bei sensiblen Verbrauchern, beispielsweise Servern, und/oder Verbrauchern, welche durchgehend im Betrieb sein sollen, beispielsweise lebenserhaltende Maschinen auf einer Intensivstation. Dadurch kann auch bei solchen wichtigen und/oder sensiblen Verbrauchern die Funktionstauglichkeit des Fehlerstromschutzes regelmäßig und ohne großen Aufwand überprüft werden. Das Schaltgerät kann weiters an bestehende Fehlerstromschutzschalter angeschlossen werden, ohne dass Modifikationen am Fehlerstromschutzschalter notwendig sind, da das Schaltgerät eine geringe Baugröße aufweist. Weiters kann dadurch der Kern des Transformators kompakt ausgeführt werden, wodurch das Schaltgerät sowohl einen geringen Platzbedarf, als auch ein geringes Gewicht aufweist, wodurch das Schaltgerät einfach in bestehende Installationsanordnungen eingesetzt werden kann. Insgesamt kann die Sicherheit elektrischer Anlagen dadurch erhöht werden.

Die Erfindung betrifft weiters ein Verfahren gemäß dem Patentanspruch 14. Die Aufgabe entspricht dabei der obengenannten Aufgabe. Auch die Vorteile des Verfahrens entsprechen den Vorteilen der oben genannten Vorrichtung.

Die Unteransprüche betreffen weitere vorteilhafte Ausgestaltungen der Erfindung.

Ausdrücklich wird hiermit auf den Wortlaut der Ansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 eine bevorzugte Ausführungsform des Schaltgerätes, welches an einem Teilstromkreis mit Fehlerstromschutzschalter angeordnet ist als Blockschaltbild; und
Fig. 2 eine bevorzugte Ausführungsform der Schaltungsanordnung des Schaltgerätes als Blockschaltbild.

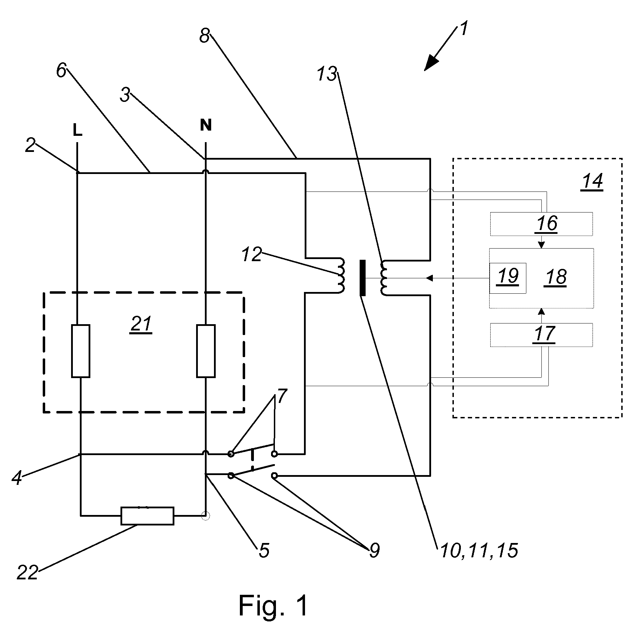

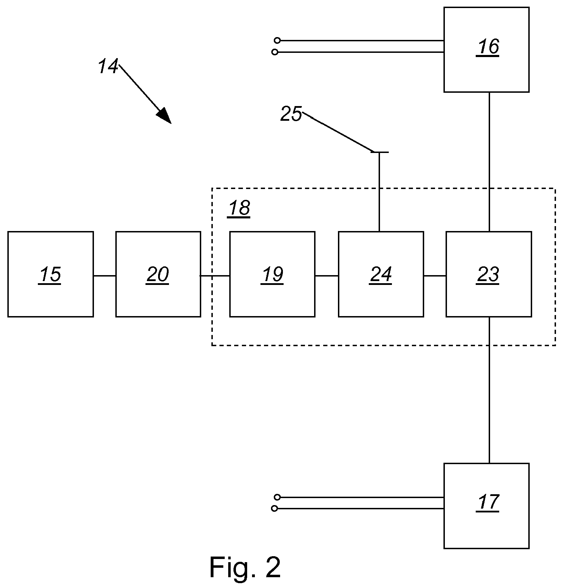

Die Fig. 1 und 2 zeigen eine bevorzugte Ausführungsform eines Schaltgerätes 1 mit wenigstens einem ersten Eingang 2 und einem zweiten Eingang 3, sowie wenigstens einem ersten Ausgang 4 und einem zweiten Ausgang 5, wobei der erste Eingang 2 mittels eines ersten Leiters 6 und einem ersten Schaltkontaktpaar 7 mit dem ersten Ausgang 4 verbunden ist, und wobei der zweite Eingang 3 mittels eines zweiten Leiters 8 und einem zweiten Schaltkontaktpaar 9 mit dem zweiten Ausgang 5 verbunden ist, wobei das Schaltgerät 1 einen Transformator 10 mit einem Kern 11 aufweist, und der erste Leiter 6 wenigstens bereichsweise eine erste Wicklung 12 des Transformators 10 bildet, und der zweite Leiter 8 wenigstens bereichsweise eine zweite Wicklung 13 des Transformators 10 bildet, wobei das Schaltgerät 1 eine Schaltungsanordnung 14 umfasst, zur Aufrechterhaltung eines ungesättigten Zustandes des Kerns 11.

Dadurch ergibt sich der Vorteil, dass die Funktionstauglichkeit eines Fehlerstromschutzschalters 1 zuverlässig ohne Unterbrechung des Stromkreises unter realen Bedingungen erfolgen kann. Dies ist besonders wichtig bei sensiblen Verbrauchern 22, beispielsweise Servern, und/oder Verbrauchern 22, welche durchgehend im Betrieb sein sollen, beispielsweise lebenserhaltende Maschinen auf einer Intensivstation. Dadurch kann auch bei solchen wichtigen und/oder sensiblen Verbraucher 22 die Funktionstauglichkeit des Fehlerstromschutzes regelmäßig und ohne großen Aufwand überprüft werden. Das Schaltgerät 1 kann weiters an bestehende Fehlerstromschutzschalter 21 angeschlossen werden, ohne dass Modifikationen am Fehlerstromschutzschalter 21 notwendig sind, da das Schaltgerät 1 eine geringe Baugröße aufweist. Weiters kann dadurch der Kern 11 des Transformators 10 kompakt ausgeführt werden, wodurch das Schaltgerät 1 sowohl einen geringen Platzbedarf, als auch ein geringes Gewicht aufweist, wodurch das Schaltgerät 1 einfach in bestehende Installationsanordnungen eingesetzt werden kann. Insgesamt kann die Sicherheit elektrischer Anlagen dadurch erhöht werden.

Fig. 1 zeigt eine bevorzugte Installationsanordnung mit einem Teilstromnetz, welches eine Phase L, einen Neutralleiter N und einen Verbraucher 22 aufweist. Die Phase L und der Neutralleiter N werden dabei von einem mehrpoligen Fehlerstromschutzschalter 21, in dieser Ausführungsform einem zweipoligen Fehlerstromschutzschalter 21, überwacht.

Um eine unterbrechungsfreie Stromversorgung des Verbrauchers 22 auch bei einer Überprüfung der Funktionstauglichkeit des Fehlerstromschutzschalters 21 zu gewährleisten ist zur Überbrückung des Fehlerstromschutzschalters 21 ein erfindungsgemäßes Schaltgerät 1 angeordnet

Das Schaltgerät 1 weist wenigstens einen ersten Eingang 2, welcher dazu vorgesehen ist mit der Phase L an der, dem Versorgungsnetz zugewandten Seite des Fehlerstromschutzschalters 21 verbunden zu werden, und wenigstens einen zweiten Eingang 3, welcher dazu vorgesehen ist mit dem Neutralleiter N an der, dem Versorgungsnetz zugewandten Seite des Fehlerstromschutzschalters 21 verbunden zu werden, auf.

Weiters weist das Schaltgerät 1 wenigstens einen ersten Ausgang 4, welcher dazu vorgesehen ist mit der Phase L an der, dem Verbraucher 22 zugewandten Seite des Fehlerstromschutzschalters 21 verbunden zu werden, und wenigstens einen zweiten Ausgang 5, welcher dazu vorgesehen ist mit dem Neutralleiter N an der, dem Verbraucher 22 zugewandten Seite des Fehlerstromschutzschalters 21 verbunden zu werden, auf.

Wenn der Fehlerstromschutzschalter 21 mehr als eine Phase überwacht, können dementsprechend weitere Eingänge und Ausgänge vorgesehen sein. Beispielsweise bei drei Phasen in einem herkömmlichen Drehstromnetz.

Der erste Eingang 2 ist mittels eines ersten Leiters 6 und eines ersten Schaltkontaktpaars 7 mit dem ersten Ausgang 4 verbunden, und der zweite Eingang 3 ist mittels eines zweiten Leiters 8 und eines zweiten Schaltkontaktpaars 9 mit dem zweiten Ausgang verbunden.

Zur Überbrückung mehrpoliger Fehlerstromschutzschalter 21 können dementsprechend mehr Leiter oder Schaltkontakte vorgesehen sein.

Bevorzugt ist vorgesehen, dass das erste Schaltkontaktpaar 7 und das zweite Schaltkontaktpaar 9 miteinander gekoppelt sind, um das erste Schaltkontaktpaar 7 und das zweite Schaltkontaktpaar 9 im Wesentlichen gleichzeitig zu schalten, beispielsweise durch eine mechanische Kopplung.

Das erste Schaltkontaktpaar 7 und das zweite Schaltkontaktpaar 9 können beispielsweise als mechanische Schalter oder als Halbleiterschalter ausgebildet sein.

Da die Schaltkontaktpaare 7, 9 unter realen Bedingungen unterschiedliche Kontaktwiderstände haben können, und/oder die Kontaktwiderstände während des Schließvorganges mit unterschiedlichen Verläufen variieren, kommt es zu unterschiedlichen elektrischen Stromstärken in dem ersten Leiter 6 und dem zweiten Leiter 8. Dadurch kann es unter Umständen zu einer Unterbrechung der Stromversorgung des Verbrauchers 22 kommen, und/oder der Fehlerstromschutzschalter 21 lässt sich nach erfolgter Überprüfung nicht mehr rückstellen ohne auszulösen.

Um die Stromstärken im ersten Leiter 6 und im zweiten Leiter 8 anzugleichen weist das Schaltgerät 1 weiters wenigstens einen Transformator 10 mit einem magnetisierbaren Kern 11 auf. Der Kern 11 des Transformators 10 besteht bevorzugt aus einem ferromagnetischen, weichmagnetischen Material, beispielsweise Eisen und/oder Eisen-Silizium-Legierungen und/oder Elektroblech.

Der erste Leiter 6 bildet wenigstens bereichsweise eine erste Wicklung 12 des Transformators 10, und der zweite Leiter 8 wenigstens bereichsweise eine zweite Wicklung 13 des Transformators 10.

Besonders bevorzugt ist vorgesehen, dass der Transformator 10 ein Übersetzungsverhältnis von 1:1 aufweist. Dies kann dadurch erfolgen, dass die Windungsanzahl der ersten Wicklung 12 und der zweiten Wicklung 13 ident ist. Dadurch fließt im ersten Leiter 6 und im zweiten Leiter 8 im Wesentlichen der gleiche Strom.

Bevorzugt ist weiters vorgesehen, dass die erste Wicklung 12 und die zweite Wicklung 13 gegensinnig gewickelt sind.

Bei einem mehrpoligen Fehlerstromschutzschalter können beispielsweise die weiteren Phasen auf entsprechende Weise mit dem Neutralleiter N gekoppelt sein, indem weitere Wicklungen auf dem Kern 11 angeordnet sind.

Der Strom in den Wicklungen magnetisiert den Kern 11 des Transformators 10, wobei es durch die magnetische Permeabilität des Kerns 11 zu einer hohen magnetischen Flussdichte kommt. Im ungesättigten Zustand des Kerns 11 besteht weiters eine im Wesentlichem lineare Beziehung zwischen der, durch die Wicklungen 12, 13 verursachten magnetischen Feldstärke und der magnetischen Flussdichte im Kern 11, deren Änderung wiederum eine Spannung in der jeweils anderen Wicklung verursacht. Der Kern 11 weist allerdings eine Sättigungsmagnetisierung auf, ab welcher eine weitere Erhöhung des Stromes in einer der Wicklungen im Wesentlichen zu keiner weiteren Erhöhung der Magnetisierung des Kernes 11 führt. Bereits vor erreichen der Sättigungsmagnetisierung geht der Kern 11 von der linearen Beziehung des ungesättigten Zustandes zu einer nichtlinearen Beziehung zwischen der magnetischen Feldstärke und der magnetischen Flussdichte, wodurch die Kopplung zwischen dem ersten Leiter 6 und dem zweiten Leiter 8 verzerrt wird, und daher eine symmetrisierende Wirkung des Transformators 10 nicht mehr gegeben ist.

Vorgesehen ist, dass das Schaltgerät 1 eine Schaltungsanordnung 14 umfasst, zur Aufrechterhaltung eines ungesättigten Zustandes des Kerns 11. Dadurch können die in der Einleitung genannten Vorteile erzielt werden.

Unter Aufrechterhaltung eines ungesättigten Zustandes des Kerns 11 im Sinne der Erfindung wird verstanden, dass die Magnetisierung des Kerns 11 in einem Bereich gehalten wird, in welchem die magnetischen Flussdichte sich im Wesentlichen linear mit der magnetischen Feldstärke ändert.

Bevorzugt ist dabei vorgesehen, dass die Schaltungsanordnung 14 zum vorgebbaren Einbringen einer vorgebbaren Energie in den Kern 11 ausgebildet ist. Diese vorggebare Energie kann beispielsweise in der Form einer magnetischen Energie eingebracht werden, welche der vorliegenden Magnetisierung des Kernes 11 entgegenwirkt. Dadurch kann die Magnetisierung des Kerns 11 verringert werden.

Alternativ oder in Kombination kann die vorggebare Energie auch eine thermische Energie sein, wobei bei der Überschreitung der Curie-Temperatur der Kern 11 seine momentane Magnetisierung verliert.

Besonders bevorzugt kann vorgesehen sein, dass die Schaltungsanordnung 14 eine dritte Wicklung 15 aufweist, welche auf dem Kern 10 angeordnet ist. Dadurch kann die Magnetisierung des Kerns 11 beeinflusst werden, ohne dass die elektrischen Ströme im ersten Leiter 6 und im zweiten Leiter 8 direkt von der Schaltungsanordnung 14 beeinflusst werden.

Vorzugsweise kann dabei vorgesehen sein, dass die dritte Wicklung 15 in mehreren Teilwicklungen, insbesondere symmetrisch, um den Kern 11 gewickelt ist. Dadurch kann eine besonders gleichmäßige und symmetrische Einkoppelung der magnetischen Energie in den Kern 11 erreicht werden.

Weiters kann bevorzugt vorgesehen sein, dass die Windungszahl der dritten Wicklung 15 größer ist als die Windungszahl der ersten Wicklung 12 und der zweiten Wicklung 13. Dadurch kann der Strom in der dritten Wicklung 15 gering gehalten werden.

Bevorzugt kann vorgesehen sein, dass die Schaltungsanordnung 14 als Regelkreis ausgebildet ist. Dadurch kann der ungesättigte Zustand des Kerns 11 stabil aufrecht erhalten werden.

Beispielsweise kann die Schaltungsanordnung 14 der Installationsanordnung wenigstens einen Messwert entnehmen, diesen Messwert analog oder digital verarbeiten und einen Stellwert in der dritten Wicklung 15 einstellen, um die Magnetisierung des Kerns 11 zu beeinflussen.

Dabei kann die Schaltungsanordnung 14 als PI-Regler ausgeführt sein. Alternativ kann ein vorgebarer Stellwert eingestellt werden, wenn der Messwert gewisse vorgebbare Bedingungen erfüllt.

Als Messwert sind dabei beispielsweise elektrische Spannungen, Spannungsdifferenzen oder Stromstärken in dem ersten Leiter 6 und/oder dem zweiten Leiter 8 vorgesehen. Alternativ kann auch die Magnetisierung des Kerns 11 durch die dritte Wicklung 15 bestimmt werden.

Als Stellwert kann eine Spannung oder eine Stromstärke in der dritten Wicklung 15 eingestellt sein.

Vorzugsweise kann vorgesehen sein, dass die Schaltungsanordnung 14 einen ersten Messwertaufnehmer 16 aufweist, zur Aufnahme einer ersten Spannung zwischen dem ersten Leiter 6 und dem zweiten Leiter 8 an einer Position vor dem Transformator 10. Eine Position vor dem Transformator 10 im Sinne der Erfindung bedeutet für den ersten Leiter 6 eine schaltungstechnische Position zwischen dem ersten Eingang 2 und der ersten Wicklung 12, und für den zweiten Leiter 8 eine schaltungstechnische Position zwischen dem zweiten Eingang 3 und der zweiten Wicklung 13. Dadurch kann ein erstes Messsignal ermittelt werden.

Weiters kann bevorzugt vorgesehen sein, dass die Schaltungsanordnung 14 einen zweiten Messwertaufnehmer 17 aufweist, zur Aufnahme einer zweiten Spannung zwischen dem ersten Leiter 6 und dem zweiten Leiter 8 an einer Position nach dem Transformator 10. Eine Position nach dem Transformator 10 im Sinne der Erfindung bedeutet für den ersten Leiter 6 eine schaltungstechnische Position zwischen dem ersten Ausgang 4 und der ersten Wicklung 12, und für den zweiten Leiter 8 eine schaltungstechnische Position zwischen dem zweiten Ausgang 5 und der zweiten Wicklung 13. Dadurch kann ein zweites Messsignal ermittelt werden.

Aus dem Vergleich des ersten Messsignals und des zweiten Messsignals der beiden Messsignale werden die Verzerrungen ermittelt.

Der erste Messwertaufnehmer 16 und/oder der zweite Messwertaufnehmer 17 können beispielsweise als Analog-Digital-Wandler ausgebildet sein. Dadurch kann der Messwert einfach einer digitalen Signalbearbeitung zur Verfügung gestellt werden. Alternativ kann der erste Messwertaufnehmer 16 und/oder der zweite Messwertaufnehmer 17 auch als Voltmeter ausgebildet sein.

Besonders bevorzugt kann vorgesehen sein, dass die Schaltungsanordnung 14 eine Analyseanordnung 18 aufweist, zur Analyse der durch den ersten Messwertaufnehmer 16 und/oder zweiten Messwertaufnehmer 17 ermittelten ersten und/oder zweiten Spannung hinsichtlich vom Transformator 10 verursachte Verzerrungen. Dadurch kann bestimmt werden, ob der Kern 11 des Transformators 10 den ungesättigten Zustand verlässt.

Bevorzugt kann die Analyseanordnung 18 als digitaler Bauteil, beispielsweise als Mikro-Controller oder als digitaler Signalprozessor, ausgeführt sein. Dadurch kann eine hohe Zuverlässigkeit eines Standardbauteils bei gleichzeitig geringen Herstellungsaufwand erreicht werden. Weiters bietet ein Mikro-Controller oder ein digitaler Signalprozessor viele Möglichkeiten der Signalverarbeitung und der Analyse. Weiters kann dadurch eine schnelle Datenverarbeitung erzielt werden.

Alternativ kann die Analyseanordnung 18 auch als analoge Schaltung ausgeführt werden.

Eine bevorzugte Ausführungsform des Schaltgerätes 1 mit der Analyseanordnung 18 wird in Fig. 2 dargestellt. Dabei stellen die Linien zwischen den einzelnen Blöcken oder Modulen keine einzelnen Leiter, sondern die jeweils erforderlichen schaltungstechnischen Verbindungen dar.

In der bevorzugten Ausführungsform wird die Spannung zwischen dem ersten Leiter 6 und dem zweiten Leiter 8 vor dem Transformator 10 von einem ersten Messwertaufnehmer 16, und die Spannung zwischen dem ersten Leiter 6 und dem zweiten Leiter 8 nach dem Transformator 10 von einem zweiten Messwertaufnehmer 17 aufgenommen, wobei beide Messwertaufnehmer 16, 17 als Analog-Digital-Wandler ausgeführt sind.

Die digitalen Messwerte werden dann an die Analyseanordnung 18 weitergeleitet, welche in der bevorzugten Ausführungsform als programmierbarer Mikro-Controller ausgebildet ist.

Bevorzugt weist die Analyseanordnung 18 eine Auswerteschaltung 23 auf, welche die Signale der beiden Messwertaufnehmer 16, 17 miteinander vergleicht. Die Auswerteschaltung 23 erkennt und wertet beispielsweise Spannungsdifferenzen aus.

Bevorzugt kann weiters vorgesehen sein, dass die Auswerteschaltung 23 die Signale der Messwertaufnehmer 16, 17 in die Frequenzbestandteile aufteilt, etwa durch eine Transformation bevorzugt durch eine schnelle Fourier Transformation, und bevorzugt einen Klirrfaktor ermittelt, um Verzerrungen zu erkennen und zu quantifizieren.

Anhand der auftretenden Verzerrungen kann sicher auf ein Verlassen des linearen, also ungesättigten Bereiches der Magnetisierung des Kerns 11 geschlossen werden.

Der Ausgang der Auswerteschaltung 23 ist bevorzugt mit dem Eingang einer Steuerungsschaltung 24 verbunden. Die Steuerungsschaltung 24 ist dazu ausgebildet, denn ausgegebenen Wert der Auswerteschaltung 23 mit einem vorgebbaren Wert zu vergleichen, und dementsprechend ein Signal an einem Ausgang der Steuerungsschaltung 24 auszugeben. Der vorggebare Wert hängt dabei beispielsweise von den magnetischen Eigenschaften des Kerns 11 ab.

Weiters kann bevorzugt vorgesehen sein, dass die Schaltungsanordnung 14 einen Generator 19, insbesondere eine Generatorschaltung, umfasst, zur Erzeugung eines elektrischen Ausgleichsstromes vorgebbarer Spannung, Frequenz und Phasenlage, und dass der Generator 19 wenigstens mittelbar schaltungstechnisch mit der dritten Wicklung 15 verbunden ist. Dadurch kann die Magnetisierung im Kern 11 gezielt beeinflusst, und einem sich anbahnenden Sättigungszustand entgegengewirkt werden.

Gemäß der besonders bevorzugten Ausführungsform ist der Generator 19 mit dem Ausgang der Steuerungsschaltung 24 schaltungstechnisch verbunden.

Weiters kann der Generator mittelbar schaltungstechnisch mit dem Stromnetz verbunden sein, wodurch der Generator 19 phasengleich mit dem Strom des Stromnetzes ist.

Der vom Generator 19 erzeugte Ausgleichsstrom kann beispielsweise abklingend sinusförmig sein. Ein derartiger Ausgleichsstrom kann von vielen Standardbauteilen einfach und vor allem in hoher Qualität mit geringem Klirrfaktor erzeugt werden.

Der vom Generator 19 generierte Ausgleichsstrom kann beispielsweise die Netzfrequenz aufweisen.

Weiters kann der vom Generator 19 erzeugte Ausgleichsstrom ein langsam abklingender Impuls sein.

Bevorzugt kann vorgesehen sein, dass der Ausgleichsstrom eine von einem zu schützenden elektrischen Netz abweichende, insbesondere höhere, Frequenz aufweist. Bevorzugt kann dabei die Frequenz ein ganzzahliges Vielfaches der Netzfrequenz sein. Dadurch kann schnell, und insbesondere unterhalb der Reaktionszeit des Fehlerstromschutzschalters, auf eine drohende Sättigung des Kerns 11 reagiert werden.

Gemäß der bevorzugten Ausführungsform kann vorgesehen sein, dass schaltungstechnisch zwischen dem Generator 19 und der dritten Wicklung 15 ein Verstärker 20 angeordnet ist. Dadurch kann der Generator 19 mit hoher Signalqualität bei geringer Leistung und geringem Herstellungsaufwand ausgebildet sein. Weiters kann durch einem veränderbaren Verstärkungsfaktor einfach ein abklingendes Signal generiert werden.

Auch ohne eine äußere magnetische Feldstärke liegt bei magnetischen Werkstoffen eine Restmagnetisierung, die sogenannte magnetische Remanenz, vor. Bei der gegenständlichen Anwendung kann daher im ungünstigsten Fall der Kern 11 bereits vor dem Fließen eines Stromes in den beiden Leitern 6, 8 außerhalb des ungesättigten Bereiches magnetisiert sein, wodurch das Aufrechterhalten eines ungesättigten Zustandes beim Schließen der Schaltkontaktpaare 7, 9 erschwert wird, oder nicht mehr gewährleistet werden kann.

Bevorzugt ist daher vorgesehen, dass die Schaltungsanordnung 14 weiters zum Verursachen eines ungesättigten Zustandes des Kerns 11 ausgebildet ist. Dies kann beispielsweise dadurch erfolgen, dass der Generator 19 in der dritten Wicklung 15 einen abschwellenden und sinusförmigen Strom erzeugt, welcher zu einer Entmagnetisierung des Kerns 11 führt.

Bevorzugt kann vorgesehen sein, dass die Schaltkontaktpaare 7, 9 schaltungstechnisch mit der Steuerungsschaltung 24 verbunden sind, wobei bei Betätigung eines mit der Steuerungsschaltung 24 verbundenen Bedienelements 25 zuerst der Kern entmagnetisiert wird, bevor die Schaltkontaktpaare 7, 9 geschlossen werden. Weiters kann nach der Trennung der beiden Schaltkontaktpaare 7, 9 eine Entmagnetisierung des Kernes durchgeführt werden. Dadurch kann eine Entmagnetisierung des Kerns 11 vor der Benützung des Schaltgerätes 1 erreicht werden, wodurch einerseits der ungesättigte Zustand des Kerns 11 zuverlässig aufrechterhalten werden kann, und andererseits der Einsatz von Ausgleichströmen während der Benützung des Schaltgerätes 1 reduziert werden kann.

Zusätzlich kann vorgesehen sein, dass, bevor die Schaltkontaktpaare 7, 9 geschlossen werden, durch die Steuerungsschaltung 24 eine Funktionsüberprüfung des Schaltgerätes 1 durchgeführt wird, wobei bei negativen Ergebnis der Funktionsüberprüfung die Schaltkontaktpaare 7, 9 nicht geschlossen werden. Dadurch kann weitgehend eine zuverlässige Funktion des Schaltgerätes 1 und eine unterbrechungsfreie Überprüfung der Funktionstauglichkeit des Fehlerstromschutzschalters 21 gewährleistet werden.

Bevorzugt ist weiters ein Fehlerstromschutzschalter 21 vorgesehen, welcher ein Schaltgerät 1 gemäß der obigen Beschreibung beinhaltet. Dadurch kann ein Fehlerstromschutzschalter 21 mit den Vorteilen des Schaltgerätes 1 in Schaltschränken eingesetzt werden, ohne dass zusätzlicher Platz für das Schaltgerät 1 notwendig ist.

Weiters beinhaltet die Erfindung ein Verfahren zur Aufrechterhaltung eines ungesättigten Zustandes eines Kerns 11 eines Transformators 10, wobei eine erste Spannung zwischen einem ersten Leiter 6 und einem zweiten Leiter 8 vor dem Kern 11 gemessen wird, wobei eine zweite Spannung zwischen dem ersten Leiter 6 und dem zweiten Leiter 8 nach dem Kern 11 gemessen wird, wobei nachfolgend aus einer Differenz der ersten und der zweiten Spannung ein Ausgleichsstrom ermittelt wird, wobei nachfolgend eine weiters auf dem Kern 11 angeordnete dritte Wicklung 15 mit einer, den Ausgleichsstrom wiedergebende Korrekturspannung beaufschlagt wird. Dadurch können die vorstehend beschriebenen Vorteile erzielt werden.

Weiters kann bevorzugt vorgesehen sein das vor und/oder nach dem Fließen eines Stromes in den beiden Leitern 6, 8 der Kern 11 des Transformators 10 entmagnetisiert wird. Dadurch kann einerseits der ungesättigte Zustand des Kerns 11 zuverlässig aufrechterhalten werden, und andererseits der Einsatz von Ausgleichströmen während dem Fließen eines Stromes in den beiden Leitern 6, 8 reduziert werden.

Nachfolgend wird ein besonders bevorzugter Verfahrensablauf beschrieben.

Zur Überbrückung des Fehlerstromschutzschalters 21 wird das Bedienelement 25 betätigt. Anschließend wird der Kern 11 durch die Schaltungsanordnung 14 entmagnetisiert. Dann werden die beiden Schaltkontaktpaare 7, 9 geschlossen, wodurch der Fehlerstromschutzschalter 21 überbrückt wird. Der Strom, welcher durch die beiden Leiter 6, 8 fließt, wird durch den Transformator 10 symmetrisiert. Ob der Kern 11 des Transformators 10 sich im ungesättigten Zustand befindet wird durch den Vergleich der Spannungen zwischen ersten Leiter 6 und zweiten Leiter 8 vor und nach dem Transformator bestimmt. Um die durch den Transformator 10 erzeugte Verzerrung zu quantifizieren wird ein Klirrfaktor ermittelt. Dieser Klirrfaktor wird mit einem vorgegebenen Wert verglichen. Bei Überschreitung dieses vorgegebenen Wertes wird ein abklingender, sinusförmiger und zum Netz phasengleicher Ausgleichstrom in einer dritten Wicklung 15 generiert, dessen Frequenz ein Vielfaches der Netzfrequenz ist. Der drohenden Sättigung des Kernes 11 wird durch den Ausgleichsstrom in der dritten Wicklung 15 entgegengewirkt. Nach erfolgter Überprüfung der Funktionstauglichkeit des Fehlerstromschutzschalters 21 wird das Bedienelement 25 ein zweites mal betätigt. Danach werden die Schaltkontaktpaare 7, 9 wieder getrennt, wodurch der Fehlerstromschutzschalter 21 nicht mehr überbrückt wird. Anschließend wird der Kern 11 wieder entmagnetisiert.

## Patentansprüche

1. Schaltgerät (1) zum Überbrücken eines Fehlerstromschutzschalters (21), wobei das Schaltgerät (1) wenigstens einen ersten Eingang (2) und einen zweiten Eingang (3), sowie wenigstens einem ersten Ausgang (4) und einem zweiten Ausgang (5) aufweist, wobei der erste Eingang (2) mittels eines ersten Leiters (6) und einem ersten Schaltkontaktpaar (7) mit dem ersten Ausgang (4) verbunden ist, und wobei der zweite Eingang (3) mittels eines zweiten Leiters (8) und einem zweiten Schaltkontaktpaar (9) mit dem zweiten Ausgang (5) verbunden ist, wobei das Schaltgerät (1) einen Transformator (10) mit einem Kern (11) aufweist, und der erste Leiter (6) wenigstens bereichsweise eine erste Wicklung (12) des Transformators (10) bildet, und der zweite Leiter (8) wenigstens bereichsweise eine zweite Wicklung (13) des Transformators (10) bildet, **dadurch gekennzeichnet, dass** das Schaltgerät (1) eine Schaltungsanordnung (14) umfasst, zur Aufrechterhaltung eines ungesättigten Zustandes des Kerns (11).

2. Schaltgerät (1) nach Anspruch 1, **dadurch gekennzeichnet, dass** die Schaltungsanordnung (14) zum vorgebbaren Einbringen einer vorgebbaren Energie in den Kern (11) ausgebildet ist.

3. Schaltgerät (1) nach Anspruch 1 oder 2, **dadurch gekennzeichnet, dass** die Schaltungsanordnung (14) eine dritte Wicklung (15) aufweist, welche auf dem Kern (10) angeordnet ist.

4. Schaltgerät (1) nach einem der Ansprüche 1 bis 3, **dadurch gekennzeichnet, dass** die Schaltungsanordnung (14) als Regelkreis ausgebildet ist.

5. Schaltgerät (1) nach einem der Ansprüche 1 bis 4, **dadurch gekennzeichnet, dass** die Schaltungsanordnung (14) einen ersten Messwertaufnehmer (16) aufweist, zur Aufnahme einer ersten Spannung zwischen dem ersten Leiter (6) und dem zweiten Leiter (8) an einer Position vor dem Transformator (10).

6. Schaltgerät (1) nach Anspruch 5, **dadurch gekennzeichnet, dass** die Schaltungsanordnung (14) einen zweiten Messwertaufnehmer (17) aufweist, zur Aufnahme einer zweiten Spannung zwischen dem ersten Leiter (6) und dem zweiten Leiter (8) an einer Position nach dem Transformator (10).

7. Schaltgerät (1) nach Anspruch 6, **dadurch gekennzeichnet, dass** die Schaltungsanordnung (14) eine Analyseanordnung (18) aufweist, zur Analyse der durch den ersten Messwertaufnehmer (16) und/oder zweiten Messwertaufnehmer (17) ermittelten ersten und/oder zweiten Spannung hinsichtlich vom Transformator (10) verursachte Verzerrungen.

8. Schaltgerät (1) nach einem der Ansprüche 3 bis 7, **dadurch gekennzeichnet, dass** die Schaltungsanordnung (14) einen Generator (19), insbesondere eine Generatorschaltung, umfasst, zur Erzeugung eines elektrischen Ausgleichsstromes vorgebbarer Spannung, Frequenz und Phasenlage, und dass der Generator (19) wenigstens mittelbar schaltungstechnisch mit der dritten Wicklung (15) verbunden ist.

9. Schaltgerät (1) nach Anspruch 8, **dadurch gekennzeichnet, dass** der Ausgleichsstrom eine von einem zu schützenden elektrischen Netz abweichende, insbesondere höhere, Frequenz aufweist.

10. Schaltgerät (1) nach Anspruch 8 oder 9, **dadurch gekennzeichnet, dass** schaltungstechnisch zwischen dem Generator (19) und der dritten Wicklung (15) ein Verstärker (20) angeordnet ist.

11. Schaltgerät (1) nach einem der Ansprüche 1 bis 10, **dadurch gekennzeichnet, dass** die Schaltungsanordnung (14) weiters zum Verursachen eines ungesättigten Zustandes des Kerns (11) ausgebildet ist.

12. Schaltgerät (1) nach einem der Ansprüche 1 bis 11, **dadurch gekennzeichnet, dass** der Transformator (10) ein Übersetzungsverhältnis von 1:1 aufweist.

13. Fehlerstromschutzschalter, welcher ein Schaltgerät (1) gemäß einem der Ansprüche 1 bis 12 beinhaltet.

14. Verfahren zum Betrieb einer Schaltungsanordnung (14) zur Aufrechterhaltung eines ungesättigten Zustandes eines Kerns (11) eines Transformators (10), wobei ein erster Leiter (6) wenigstens bereichsweise eine erste Wicklung (12) des Transformators (10) bildet, wobei ein zweiter Leiter (8) wenigstens bereichsweise eine zweite Wicklung (13) des Transformators (10) bildet, wobei eine erste Spannung zwischen dem ersten Leiter (6) und dem zweiten Leiter (8) vor dem Kern (11) gemessen wird, wobei eine zweite Spannung zwischen dem ersten Leiter (6) und dem zweiten Leiter (8) nach dem Kern (11) gemessen wird, wobei nachfolgend aus einer Differenz der ersten und der zweiten Spannung ein Ausgleichsstrom ermittelt wird, wobei nachfolgend eine weiters auf dem Kern (11) angeordnete dritte Wicklung (15) mit einer, den Ausgleichsstrom wiedergebende Korrekturspannung beaufschlagt wird.

## Claims

1. Switching device (1) for bridging a residual current circuit breaker (21), wherein the switching device (1) has at least a first input (2) and a second input (3), as well as at least a first output (4) and a second output (5), wherein the first input (2) is connected by means of a first conductor (6) and a first switch contact pair (7) to the first output (4), and wherein the second input (3) is connected by means of a second conductor (8) and a second switch contact pair (9) to the second output (5), wherein the switch device (1) comprises a transformer (10) with a core (11) and the first conductor (6) at least in sections forms a first winding (12) of the transformer (10) and the second conductor (8) at least in sections forms a second winding (13) of the transformer (10), **characterised in that** the switch device (1) comprises a switching arrangement (14) for maintaining a unsaturated state of the core (11).

2. Switch device (1) according to claim 1 **characterised in that** the switching arrangement (14) is designed for the pre-determinable introduction of pre-determinable energy into the core (11).

3. Switch device (1) according to claim 1 or 2 **characterised in that** the switching arrangement (14) has a third winding (15) which is arranged on the core (10).

4. Switch device (1) according to any one of claims 1 to 3 **characterised in that** switching arrangement (14) is designed in the form of a control circuit.

5. Switch device (1) according to any one of claims 1 to 4 **characterised in that** the switching arrangement (14) has a first measurement recorder (16) for recording a first voltage between the first conductor (6) and the second conductor (8) at a position before the transformer (10).

6. Switch device (1) according to claim 5 **characterised in that** the switching arrangement (14) has a second measurement recorder (17) for recording a second voltage between the first conductor (6) and the second conductor (8) at a position behind the transformer (10).

7. Switch device (1) according to claim 6 **characterised in that** the switching arrangement (14) has an analysis device (18) for the analysis of the first and/or second voltage recorded by the first measurement recording (16) and/or the second measurement recorder (17) with regard to distortions caused by the transformer (10).

8. Switch device (1) according to any one of claims 3 to 7 **characterised in that** the switching arrangement (14) comprises a generator (19), more particularly a generator switch, for producing an electrical equalising current of pre-determinable voltage, frequency and phasing, and **in that** the generator (19) is at least indirectly connected to the third winding (15) in terms of the circuit design.

9. Switch device (1) according to claim 8 **characterised in that** the equalising current has a frequency which is different, more particularly higher, than an electrical network to be protected.

10. Switch device (1) according to claim 8 or 9 **characterised in that** in terms of the circuit design an amplifier (20) is arranged between the generator (19) and the third winding (15).

11. Switch device (1) according to any one of claims 1 to 10 **characterised in that** the switching arrangement (14) is also designed for bringing about an unsaturated state of the core (11).

12. Switch device (1) according to any one of claims 1 to 11 **characterised in that** the transformer (10) has a transformation ratio of 1:1.

13. Residual current breaker switch which contains a switch device (1) in accordance with any one of claims 1 to 12.

14. Method of operating a switching arrangement (14) for maintaining an unsaturated state of a core (11) of a transformer (10), wherein a first conductor (6) at least in sections forms a first winding (12) of the transformer (10), wherein a second conductor (8) at least in sections forms a second winding (13) of the transformer, wherein a first voltage between the first conductor (6) and the second conductor (8) is measured before the core (11), wherein a second voltage between the first conductor (6) and the second conductor (8) is measured after the core (11), wherein subsequently from a difference between the first and the second voltage an equalising current is determined, wherein a correction voltage reflecting the equalising current is then applied to a third winding (15) which is also arranged on the core (11).

## Revendications

1. Appareil de commutation (1) pour ponter un disjoncteur à courant différentiel (21), l'appareil de commutation (1) comportant au moins une première entrée (2) et une deuxième entrée (3) ainsi qu'au moins une première sortie (4) et une deuxième sortie (5), la première entrée (2) étant reliée au moyen d'un premier conducteur (6) et d'une première paire de contacts de commutation (7) à la première sortie (4) et la deuxième entrée (3) étant reliée au moyen d'un deuxième conducteur (8) et d'une deuxième paire de contacts de commutation (9) à la deuxième sortie (5), l'appareil de commutation (1) comportant un transformateur (10) avec un noyau (11), le premier conducteur (6) formant au moins par endroits un premier enroulement (12) du transformateur (10) et le deuxième conducteur (8) formant au moins par endroits un deuxième enroulement (13) du transformateur (10), **caractérisé en ce que** l'appareil de commutation (1) comprend un circuit (14) servant à maintenir un état non saturé du noyau (11).

2. Appareil de commutation (1) selon la revendication 1, **caractérisé en ce que** le circuit (14) est conçu pour introduire d'une manière pouvant être prescrite une énergie pouvant être prescrite dans le noyau (11).

3. Appareil de commutation (1) selon la revendication 1 ou 2, **caractérisé en ce que** le circuit (14) comporte un troisième enroulement (15) qui est agencé sur le noyau (10).

4. Appareil de commutation (1) selon l'une des revendications 1 à 3, **caractérisé en ce que** le circuit (14) est conçu comme une boucle à verrouillage de phase.

5. Appareil de commutation (1) selon l'une des revendications 1 à 4, **caractérisé en ce que** le circuit (14) comporte un premier transducteur (16) pour détecter une première tension entre le premier conducteur (6) et le deuxième conducteur (8) à une position avant le transformateur (10).

6. Appareil de commutation (1) selon la revendication 5, **caractérisé en ce que** le circuit (14) comporte un deuxième transducteur (17) pour détecter une deuxième tension entre le premier conducteur (6) et le deuxième conducteur (8) à une position après le transformateur (10).

7. Appareil de commutation (1) selon la revendication 6, **caractérisé en ce que** le circuit (14) comporte un dispositif d'analyse (18) pour analyser la première et/ou la deuxième tension déterminées par le premier transducteur (16) et/ou le deuxième transducteur (17) quant à des distorsions provoquées par le transformateur (10).

8. Appareil de commutation (1) selon l'une des revendications 3 à 7, **caractérisé en ce que** le circuit (14) comprend un générateur (19), notamment un circuit générateur, pour produire un courant électrique compensateur ayant une tension, une fréquence et une relation de phase qui peuvent être prescrites et **en ce que** le générateur (19) est relié au moins indirectement, du point de vue de la technique des circuits, au troisième enroulement (15).

9. Appareil de commutation (1) selon la revendication 8, **caractérisé en ce que** le courant compensateur a une fréquence différente de celle d'un réseau électrique à protéger, notamment une fréquence supérieure.

10. Appareil de commutation (1) selon la revendication 8 ou 9, **caractérisé en ce que**, du point de vue de la technique des circuits, un amplificateur (20) est agencé entre le générateur (19) et le troisième enroulement (15).

11. Appareil de commutation (1) selon l'une des revendications 1 à 10, **caractérisé en ce que** le circuit (14) est aussi conçu pour provoquer un état non saturé du noyau (11).

12. Appareil de commutation (1) selon l'une des revendications 1 à 11, **caractérisé en ce que** le transformateur (10) a un rapport de transformation de 1:1.

13. Disjoncteur à courant différentiel qui contient un appareil de commutation (1) selon l'une des revendications 1 à 12.

14. Procédé de fonctionnement d'un circuit (14) pour maintenir un état non saturé d'un noyau (11) d'un transformateur (10), un premier conducteur (6) formant au moins par endroits un premier enroulement (12) du transformateur (10), un deuxième conducteur (8) formant au moins par endroits un deuxième enroulement (13) du transformateur (10), une première tension étant mesurée entre le premier conducteur (6) et le deuxième conducteur (8) avant le noyau (11), une deuxième tension étant mesurée entre le premier conducteur (6) et le deuxième conducteur (8) après le noyau (11), un courant compensateur étant ensuite déterminé à partir d'une différence entre la première et la deuxième tension, un troisième enroulement (15) agencé plus loin sur le noyau (11) étant ensuite alimenté avec une tension de correction reproduisant le courant compensateur.
